# EUROPÄISCHE PATENTSCHRIFT

(11) **EP 1 188 220 B1**
(45) Veröffentlichungstag und Bekanntmachung des Hinweises auf die Patenterteilung: **12.05.2004**
(21) Anmeldenummer: 01933777.3
(22) Anmeldetag: 29.03.2001
(51) Int. Cl.: H02K 23/66, H02K 7/116, H02K 5/14, H02K 5/22, H02K 11/04

(54) **ANTRIEB FÜR EIN VERSTELLBARES FAHRZEUGTEIL**
DRIVE SYSTEM FOR AN ADJUSTABLE VEHICLE PART
MECANISME D'ENTRAINEMENT D'UNE PIECE DE VEHICULE REGLABLE

(30) Priorität: 12.04.2000 DE 10018230
(43) Veröffentlichungstag der Anmeldung: 20.03.2002
(73) Patentinhaber: Webasto Vehicle Systems International GmbH, 82131 Stockdorf (DE)
(72) Erfinder: KRAUS, Thomas, 82131 Gauting (DE); ENGL, Rudolf, 84478 Wald Kraiburg (DE); KLESING, Joachim, 80992 München (DE); MEIER, Bernhard, 85551 Kirchheim (DE)
(74) Vertreter: Konnerth, Dieter Hans
(86) Internationale Anmeldenummer: PCT/EP2001/003606
(87) Internationale Veröffentlichungsnummer: WO 2001/080407

(56) Entgegenhaltungen:
- EP-A- 0 835 196
- WO-A-98/58825
- DE-A- 4 315 404
- DE-A- 19 706 898
- DE-A- 19 727 118
- DE-A- 19 805 185
- FR-A- 2 777 136
- GB-A- 2 096 800
- US-A- 4 614 886
- US-A- 4 857 812

## Beschreibung

Die vorliegende Erfindung betrifft einen Antrieb für ein verstellbares Fahrzeugteil, insbesondere für ein Deckelelement eines Fahrzeugdaches.

Aus der DE 197 27 118 A1 ist ein elektrischer Antrieb bekannt, bei dem in einem Gehäusedeckel elektronische Bauteile zur Ansteuerung eines Elektromotors angeordnet sind. Die Verbindung der Bauteile erfolgt über ein Stanzgitter und durch Schweißverbindungen.

Aus der US 4,857,812 A ist ein elektrischer Antrieb für eine Verwendung in einem Automobil bekannt, bei dem ebenfalls in einem Gehäusedeckel elektronische Bauteile zur Ansteuerung eines Elektromotors angeordnet sind. Die Anordnung erfolgt auf einer separaten Platine, die durch Kleben mit dem Gehäusedeckel verbunden ist.

Aus EP 0 835 196 (WO 97/01464 A) und auch aus der WO 98/58825 A2 sind Antriebe für einen Scheibenwischer bekannt, bei denen eine Platine mit elektronischen Bauteilen in der Projektion seitlich eines Schneckenrades angeordnet ist, wodurch die Antriebe relativ groß ausfallen.

Aus der DE 43 37 390 A1 ist ein elektrischer Antrieb bekannt, bei welchem die Bürstenführung für den Elektromotor mit einem Elektronikgehäuse verbunden ist, weiches getrennt von dem das Schneckenrad umgebenden Getriebegehäuse ausgebildet ist und auf dieses aufgeclipst wird, wobei der Bürstenträger nahe der Schneckenwelle angeordnet ist. Das Elektronikgehäuse ist seitlich versetzt bezüglich des Schneckenrads angeordnet und umgibt die Elektronikbauteile der Motorelektronik, die auch Entstörbauteile umfaßt, wobei die Elektronikbauteile auf einer in dem Elektronikgehäuse aufgenommenen Platine angeordnet oder in einem integrierten Bauteil enthalten sein können. Die Motorelektronik kann auch aus einem die elektronischen Bauteile aufweisenden Vergußbauteil bestehen. Die in der Bürstenführung längs verschiebbar gelagerten Bürsten werden über Metallbahnen bestromt, die nicht Bestandteil der Motorelektronikplatine sind.

Aus der DE 43 15 404 A1 ist ein Antrieb bekannt, bei welchem ein innerhalb des Motorgehäuses angeordneter Bürstenhalter als Träger für eine Leiterplatte dient, welche die Leistungs- und Steuerelektronik für den Motor aufweist.

Aus der DE 90 13 006 U1 ist ein Antrieb bekannt, bei welchem die Bauteile der Motorelektronik auf einer Leiterplatte seitlich versetzt bezüglich des Schneckenrads innerhalb des Getriebegehäuses angeordnet sind. Die Leiterplatte dient auch als Aufnahme für einen Bürstenträger, der nahe des Schneckenrads bzw. der Schneckenwelle angeordnet ist. Die Elektronikbauteile können als SMD-Bauteile ausgebildet sein.

Ein weiterer Antrieb ist aus der EP 0 538 495 A1 bekannt, bei welchem der Bürstenträger als separates Bauteil als Platte ausgebildet und mittels eines Steckers mit der in einem separaten Elektronikgehäuse untergebrachten Motorelektronik verbunden ist, welche auf das Getriebegehäuse aufsteckbar ist.

Aus der DE 43 23 946 C1 ist ein weiterer Antrieb bekannt, bei welchem das Schneckenrad und die Motorelektronik in gesonderten, miteinander lösbar verbundenen Gehäuseteilen untergebracht sind.

Nachteilig bei all diesen bekannten Antrieben ist der relativ hohe Raumbedarf.

Es ist Aufgabe der vorliegenden Erfindung, einen Antrieb für ein verstellbares Fahrzeugteil zu schaffen, welcher möglichst kompakt ausgebildet ist.

Diese Aufgabe wird erfindungsgemäß gelöst durch einen Antrieb, wie er durch die Merkmale des Anspruchs 1 definiert ist. Vorteilhafte Ausgestaltungen der Erfindung sind den Unteransprüchen zu entnehmen.

Durch die Erfindung kann der Raumbedarf des Antriebs insgesamt vermindert werden, indem die Motorelektronik, statt wie bisher neben dem Schneckenrad angeordnet zu sein, in den Bereich des Schneckenrads verschoben wird und so Bauraum eingespart wird und indem zudem der Gehäusedeckel des Getriebegehäuses, der aus einem elektrisch isolierenden Kunststoff gefertigt ist, mit integrierten Leiterbahnen in MID (Moulded Interconnected Device)-Technologie unmittelbar zum Träger der elektronischen Bauteile wird, so dass eine separate Platine überflüssig wird, wodurch der Antrieb noch flacher wird. Durch die hohe Integrationsdichte wird der Antrieb auch insbesondere bei großen Stückzahlen noch kostengünstiger herstellbar.

In vorteilhafter Ausgestaltung sind dabei die elektronischen Bauteile mindestens zum Teil von ASICs gebildet und/oder als SMD-Bauteile ausgebildet.

Vorteilhafterweise ist der Gehäusedeckel zusätzlich mit einem elektrischen Anschluss versehen. Dadurch ist auch eine Steckverbindung zum unmittelbaren Anschließen des Antriebs in den Deckel integriert, wodurch eine zusätzliche Verdrahtung entfallen kann.

Nachstehend werden Ausführungsformen der Erfindung anhand der beiliegenden Zeichnungen beispielhaft näher erläutert, wobei:
- Fig. 1: eine perspektivische Ansicht einer ersten Ausführungsform der Erfindung in montiertem Zustand zeigt;
- Fig. 2: die Ausführungsform von Fig. 1 bei der Montage zeigt;
- Fig. 3A und 3B: perspektivische Darstellungen aus unterschiedlichen Blickwinkeln sind, welche ebenfalls die Montage der Ausführungsform von Fig. 1 und 2 veranschaulichen; und
- Fig. 4A und 4B: Ansichten ähnlich zu Fig. 3A und 3B sind, wobei jedoch eine zweite Ausführungsform der Erfindung dargestellt ist.

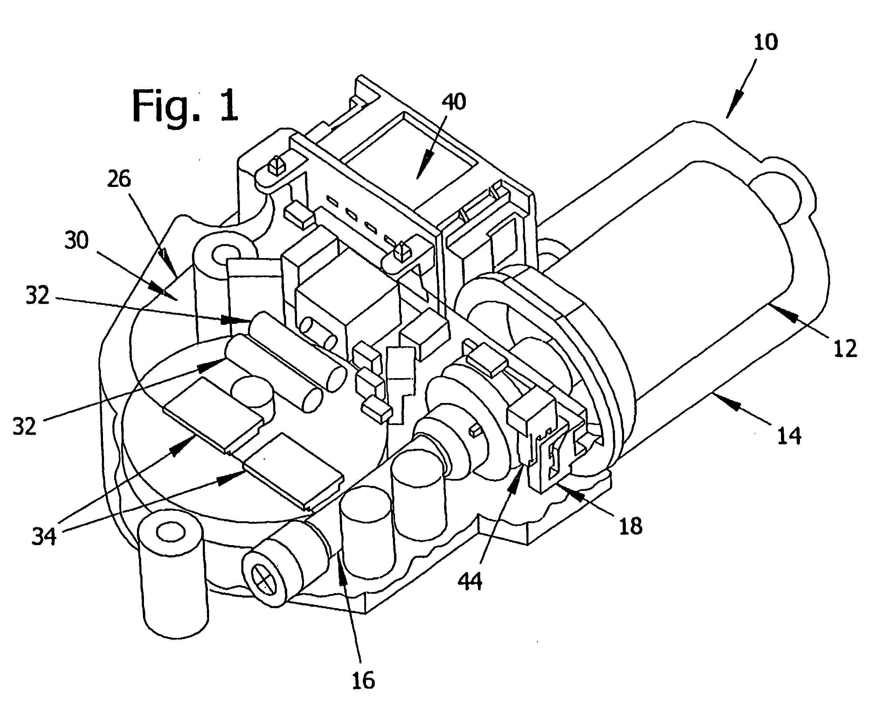

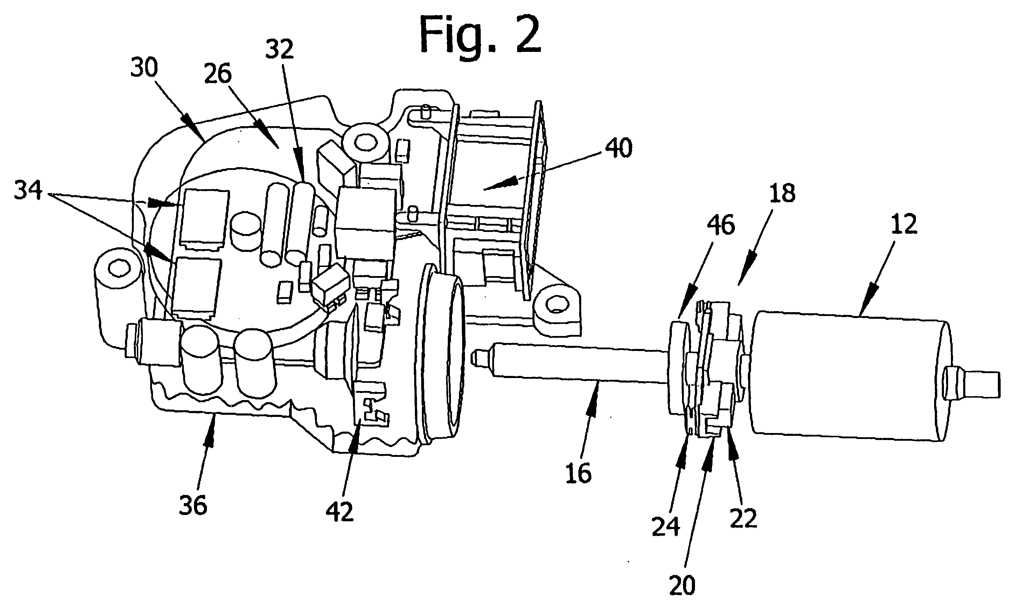

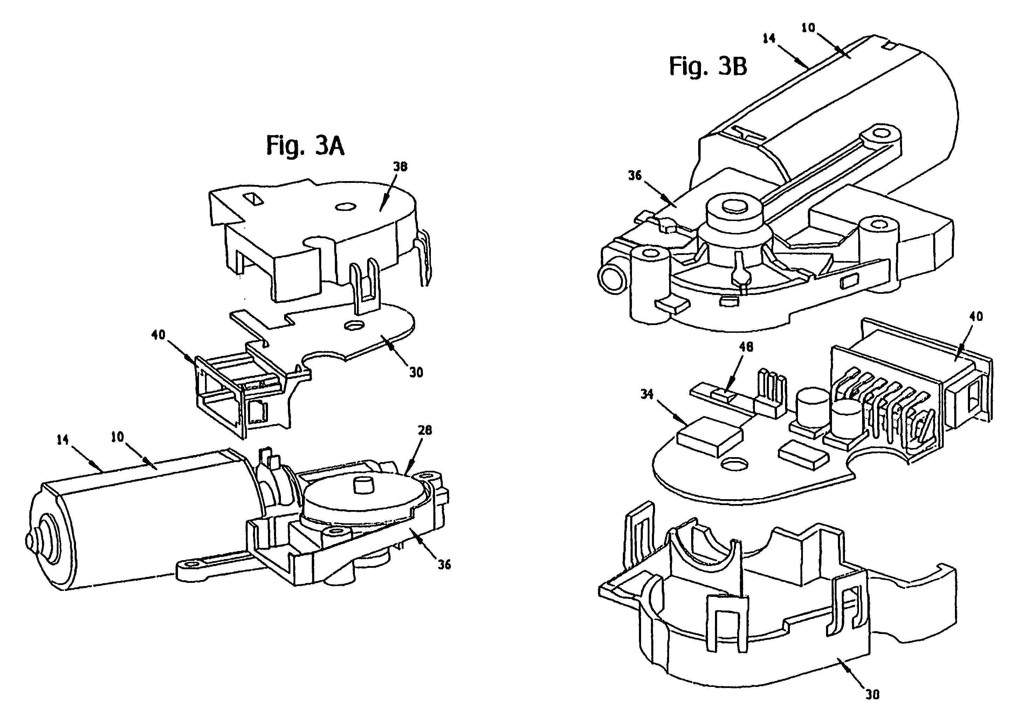

Eine erste Ausführungsform der Erfindung ist in Fig. 1 bis 3B dargestellt, wobei die Antriebseinheit einen Elektromotor 10 mit einem Anker 12, der von einem Poltopf 14 umgeben wird, eine Motorwelle bzw. Polwelle 16 sowie ein Bürstensystem 18 umfaßt, welches einen Bürstenträger 20 zur Aufnahme von Bürsten 22 sowie eine Kontaktierung 24 für den elektrischen Kontakt mit einer Motorelektronik 26 aufweist. Die Motorwelle 16 trägt in ihrem vorderen Bereich eine (nicht dargestellte) Schneckenwelle, welche mit einem Schneckenrad 28 kämmt. Der Begriff "trägt" soll hierbei sowohl eine als separates Bauteil ausgebildete Schneckenwelle als auch eine einstückig mit der Motorwelle 16 ausgebildete Schneckenwelle umfassen. Das so gebildete Untersetzungsgetriebe dient zum Antrieb eines verstellbaren Fahrzeugteils, wobei es sich vorzugsweise um ein Deckelelement eines öffnungsfähigen Fahrzeugdaches handelt, z.B. den Deckel eines Schiebedaches oder Schiebehebedaches oder eine Lamelle eines Lamellendaches.

Die Motorelektronik 26 ist auf einer Leiterplatte bzw. Platine 30 untergebracht, welche parallel und im wesentlichen konzentrisch zu dem Schneckenrad 28 angeordnet ist. Die Motorelektronik 26 umfaßt die Steuerelektronik für den Motor 10, sowie EMV-Entstörelemente 32 für den Motor 10. Die Bauelemente der Motorsteuerung sind vorzugsweise mindestens zum Teil als ASICs 34 ausgebildet. Alle elektronischen Bauteile sind vorzugsweise als SMD-Bauteile ausgebildet.

Das Getriebegehäuse besteht vorzugsweise aus Kunststoff und wird von einem Trägerteil 36 und einem Gehäusedeckel 38 gebildet. Das Trägerteil 36 trägt dabei den Elektromotor 10 und das Schneckenrad 28, während die Leiterplatte 30 mit der Motorelektronik 26 zwischen dem Schneckenrad 28 und dem Gehäusedeckel 38 angeordnet ist. Die Leiterplatte 30 trägt ferner einen elektrischen Steckanschluß 40 zum Anschluß der Stromversorgungs- und Steuerleitungen. Das Trägerteil 36 ist mit einer Aufnahme 42 für den Bürstenträger 20 und mit einer entsprechenden Kontaktierungseinrichtung 44, bei der es sich um eingelegte und/oder umspritzte leitende Elemente handelt, versehen, so dass das Bürstensystem in das Getriebegehäuse integriert ist. Die Kontakteinrichtung 44 kann in die Platine 30 integriert sein oder über separate Leiterbahnen mit dieser verbunden sein. Alternativ kann auch der Bürstenträger in die Platine 30 integriert sein. In diesem Fall muß eine Masseverbindung zwischen der Platine 30 und dem Poltopf 14 bestehen.

Die Motorwelle 16 ist drehfest mit einem Magnetrad 46 versehen, welches mit auf der Platine 30 vorgesehenen Hall-Sensoren 48 zusammenwirkt, um die Stellung des von der Antriebseinheit angetriebenen verstellbaren Fahrzeugteils zu erfassen.

Die Zusammenfassung von Elektronikfunktionen in Form von ASICs 34 verringert die Zahl der erforderlichen Elektronikbauelemente und senkt damit den erforderlichen Bauraum und die Herstellungskosten. Die Ausbildung der Elektronikbauelemente als SMD-Bauelemente bewirkt ebenfalls eine Miniaturisierung und Kostensenkung.

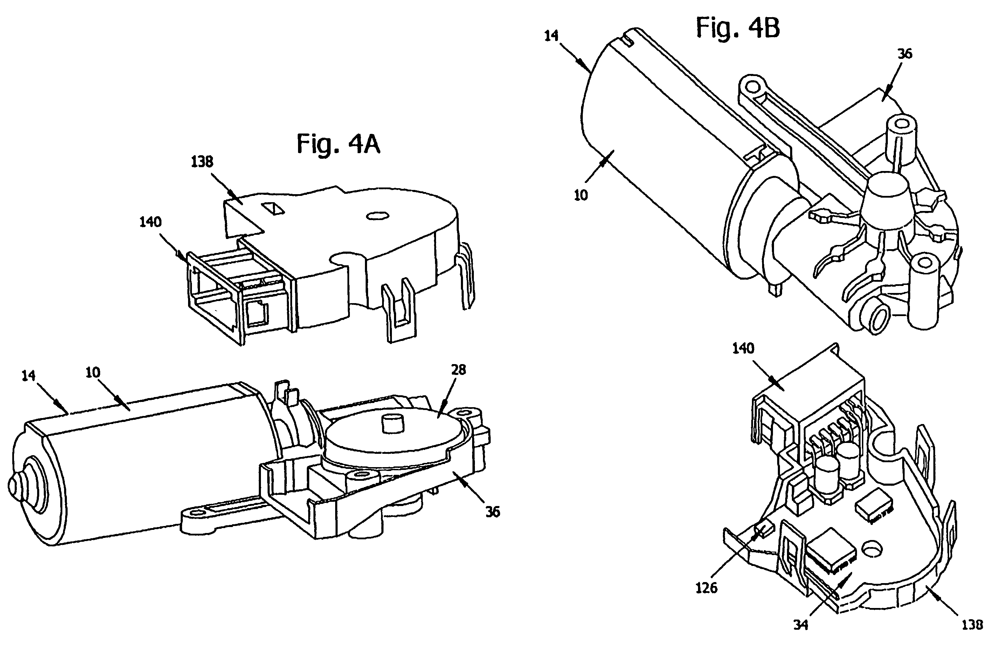

Eine noch kompaktere Bauform der Antriebseinheit ist in Fig. 4A und 4B gezeigt, die sich im wesentlichen von der bisher beschriebenen Ausführungsform dadurch unterscheidet, dass keine separate Platine 30 für die Motorelektronik 26 vorgesehen ist, sondern daß die Bauteile der Motorelektronik 126 direkt auf der Innenseite des Gehäusedeckels 138 in dem Bereich oberhalb des Schneckenrads 28 montiert sind. Dabei ist es wesentlich, dass das Getriebegehäuse bzw. mindestens der Deckel 138 aus elektrisch isolierendem Material, vorzugsweise Kunststoff, gefertigt ist, wobei die Leiterbahnen zum elektrischen Verbinden der elektronischen Bauteile auf der Innenseite des Gehäusedeckels 138 aufgebracht sind. Die elektronischen Bauelemente sind bevorzugt als SMD-Bauteile ausgebildet. Diese Art der Elektronikausbildung ist auch als MID (Moulded lnterconnected Device) bekannt. Der Steckanschluß 140 ist als Teil des Gehäusedeckels 138 ausgebildet.

Die Ausführungsform gemäß Fig. 4A und 4B erlaubt durch den Wegfall der Platine eine noch kompaktere Ausbildung der Antriebseinheit.

Bei den beschriebenen Ausführungsformen ist wesentlich, dass die elektronischen Bauelemente der Motorelektronik im wesentlichen zwischen dem Schneckenrad und dem Getriebegehäuse, vorzugsweise im wesentlichen innerhalb der Kontur des Schneckenrads, angeordnet sind.

## Patentansprüche

1. Antrieb für ein verstellbares Fahrzeugteil, mit einem Elektromotor (10), mit einem Schneckengetriebe, das ein von einem Getriebegehäuse (36; 138) umgebenes Schneckenrad (28) aufweist, und mit elektronischen Bauelementen (32, 34) für den Betrieb des Elektromotors, von denen mindestens der wesentliche Teil zwischen dem Schneckenrad (28) und dem Getriebegehäuse (36; 138) innerhalb der Kontur des Schneckenrads (28) angeordnet ist, wobei das Getriebegehäuse sich im wesentlichen aus einem Träger (36), welcher den Elektromotor (10) und das Schneckenrad (28) trägt, und einem aus elektrisch isolierendem Kunststoff gefertigten Gehäusedeckel (138) zusammensetzt, auf welchen Leiterbahnen zum elektrischen Verbinden der elektronischen Bauteile (32, 34) aufgebracht sind, die direkt auf den Gehäusedeckel (138) montiert sind.

2. Antrieb nach Anspruch 1, **dadurch gekennzeichnet, daß** die elektronischen Bauteile mindestens zum Teil von ASICs (34) gebildet sind.

3. Antrieb nach einem der vorhergehenden Ansprüche, **dadurch gekennzeichnet, daß** die elektronischen Bauteile (32, 34) als SMD-Bauteile ausgebildet sind.

4. Antrieb nach einem der vorhergehenden Ansprüche, **dadurch gekennzeichnet, daß** der Gehäusedeckel (138) mit einem elektrischen Anschluß (140) versehen ist.

## Claims

1. Drive for an adjustable motor vehicle part, having an electric motor (10) with a worm drive which has a worm wheel (28) surrounded by a gearbox (36; 138), and having electronic components (32, 34) for the operation of the electric motor, of which at least the important part is located between the worm wheel (28) and the gearbox (36; 138), within the contour of the worm wheel (28), the gearbox being substantially composed of a carrier (36) which bears the electric motor (10) and the worm wheel (28), and a box cover (138) produced from electrically insulating plastic, to which printed conductors are applied for the electrical connection of the electronic components (32, 34), which are mounted directly on the box cover (138).

2. Drive according to Claim 1, **characterized in that** the electronic components are formed at least in part by ASICs (34).

3. Drive according to one of the preceding claims, **characterized in that** the electronic components (32, 34) are formed as SMD components.

4. Drive according to one of the preceding claims, **characterized in that** the box cover (138) is provided with an electrical terminal (140).

## Revendications

1. Mécanisme d'entraînement d'une pièce de véhicule réglable, avec un moteur électrique (10), avec un engrenage à vis sans fin qui présente une roue tangente (28) entourée par un carter d'engrenage (36 ; 138) et avec des composants électroniques (32, 34) pour le fonctionnement du moteur électrique, dont au moins la partie essentielle est placée entre la roue tangente (28) et le carter d'engrenage (36 ; 138) à l'intérieur du contour de la roue tangente (28), le carter d'engrenage se composant pour l'essentiel d'un support (36), qui porte le moteur électrique (10) et la roue tangente (28), et d'un couvercle de carter (138) réalisé en plastique électro-isolant, sur lequel sont appliquées des pistes conductrices pour la connexion électrique des composants électroniques (32, 34) qui sont directement montés sur le couvercle de carter (138).

2. Mécanisme d'entraînement selon la revendication 1, **caractérisé par le fait que** les composants électroniques sont formés au moins en partie d'ASIC (34).

3. Mécanisme d'entraînement selon l'une des revendications précédentes, **caractérisé par le fait que** les composants électroniques (32, 34) sont formés de composants pour montage en surface (SMD).

4. Mécanisme d'entraînement selon l'une des revendications précédentes, **caractérisé par le fait que** le couvercle de carter (138) est muni d'une connexion électrique (140).
